# EUROPÄISCHE PATENTANMELDUNG

(11) **EP 1 695 779 A1**
(43) Veröffentlichungstag der Anmeldung: **30.08.2006**
(21) Anmeldenummer: 06004976.4
(22) Anmeldetag: 20.02.2006
(51) Int. Cl.: B22F 5/00

(54) **Verfahren zum Herstellen einer Leichtbauplatte aus zwei miteinander verbundenen Metallblechen und einem dämmenden Kern**

(30) Priorität: 24.02.2005 DE 102005008447
(71) Anmelder: Gleich GmbH, 24568 Kaltenkirchen (DE)
(72) Erfinder: Gleich, Günther, 24568 Kaltenkirchen (DE); Simancik, Frantisek, 85101 Bratislava (SK)
(74) Vertreter: Biehl, Christian

(57) **Zusammenfassung**

Verfahren zum Herstellen einer Leichtbauplatte aus zwei miteinander verbundenen Metallblechen, mit den Schritten Aufschweißen von Stiften und Hülsen auf die eine Seite der Bleche in einem vorgegebenen Muster derart, dass an dem Ort, an dem auf das eine Blech Stifte aufgeschweißt werden, auf das andere Blech Hülsen aufgeschweißt werden, und Zusammenfügen der beiden Bleche unter Einführen und kraftschlüssigem Verbinden der Stifte in die und mit den Hülsen, wobei vor dem Zusammenfügen der Bleche auf das eine der Bleche ein Kern aus einem leichten, Wärme und/oder Schall dämmenden Material aufgelegt wird, und die Stifte in die Hülsen unter Bildung einer Quetschverbindung eingepresst werden.

## Beschreibung

Die Erfindung betrifft ein Verfahren zum Herstellen einer Leichtbauplatte aus zwei miteinander verbundenen Metallblechen.

Leichtbauplatten, die aus zwei miteinander verbundenen Metallblechen bestehen, sind in der verschiedener Form bekannt. Dabei ist von Bedeutung, dass die nach außen weisenden Flächen die Metallbleche vollständig eben sind. andererseits ist für eine zuverlässige Verbindung der Metallbleche, ggf. über einen zwischen den Metallblechen angeordneten Kern (Sandwich), zu sorgen.

Bei Verwendung eines derartigen Kerns ist es möglich, die Metallbleche mit dem Kern großflächig zu verkleben. Dies ist insofern nachteilig, als der Kleber sich bei der Weiterverarbeitung störend auswirken kann. Weiter ist die Dauerhaftigkeit des Klebers insbesondere bei thermischer Beanspruchung nicht gewährleistet.

In der DE 44 26 627 C2 wird ein Verfahren beschrieben, bei dem die Oberflächen eines schaumfähigen Halbzeugs, dass durch Kompaktieren einer Mischung eines Metallpulvers und eines Treibmittels hergestellt ist, mit nicht schaumfähigen Metallschichten walzplattiert wird, wobei die Schichten nach Aufschäumen des Halbzeugs mit der Oberfläche des Metallschaums metallurgisch fest verbunden bleiben. Bei diesem Verfahren muss das schaumfähige Halbzeug zerschmelzen, so dass es zu einer Verschlechterung der mechanischen Eigenschaften der Deckbleche infolge erhöhter Temperatur oder einer Reaktion mit dem geschmolzenen Schaum kommen kann. Weiter ist aus der EP 1 336 453 B1 ist eine Sandwichplatte bekannt, die aus zwei Blechen besteht, die jeweils mit zusammenwirkenden Hülsen bzw. Stiften versehen ist.

Bei der zuletzt genannten Ausbildung muss die Anzahl der Stifte und Hülsen pro Flächeneinheit groß gewählt werden, um eine ausreichende Stabilität zu erzielen. Unbefriedigend sind weiter die wärme- und schalldämmenden Eigenschaften.

Der Erfindung liegt damit die Aufgabe zugrunde, eine Leichtbauplatte zu schaffen, die bezüglich der Stabilität und der Wärme - und/oder schalldämmenden Eigenschaften verbessert ist.

Erfindungsgemäß wird diese Aufgabe durch ein Verfahren mit den Merkmalen des Hauptanspruchs gelöst. Dabei wird ein Verfahren zum Herstellen einer Leichtbauplatte aus zwei miteinander verbundenen Metallblechen, mit den Schritten Aufschweißen von Stiften und Hülsen auf die eine Seite der Bleche in einem vorgegebenen Muster derart, dass an dem Ort, an dem auf das eine Blech Stifte aufgeschweißt werden, auf das andere Blech Hülsen aufgeschweißt werden, und Zusammenfügen der beiden Bleche unter Einführen und kraftschlüssigem Verbinden der Stifte in die und mit den Hülsen vorgeschlagen.

Vor dem Zusammenfügen der Bleche wird auf das eine der Bleche ein Kern aus einem leichten, Wärme und/oder Schall dämmenden Material aufgelegt, und die Stifte werden in die Hülsen unter Bildung einer Quetschverbindung eingepresst werden.

Die zusammenwirkenden Flächen von Stiften und Hülsen sollten bevorzugt rauh ausgebildet sein, und mit Retentionen versehen sein.

Besonders eignen sich Bleche aus Aluminium oder einer Aluminiumlegierung, sie können jedoch auch aus Stahl bestehen. Diese Bleche werden dann bevorzugt mit Stiften und/oder Hülsen aus Aluminium oder einer Aluminiumlegierung kombinert werden. Auch diese können aus Stahl bestehen. Dazu wird ein Kern aus einem Aluminiumschaum in einer bevorzugten Ausführung vorgeschlagen.

Schließlich wird weiter bevorzugt, schon vor dem Zusammenfügen zwischen Bleche und Kern einen Klebstoff aufzubringen.

Vor dem Zusammenfügen der Bleche können auf das eine der Bleche ein Kern oder mehrere kernförmige Schichten aus einem leichten, Wärme und/oder Schall dämmenden Material in verschiedenen Anordnungen aufgelegt werden, so dass ein Sandwich gebildet wird. Der Verbindungskern besteht dabei vorzugsweise aus Aluminiumschaum, wobei aber auch andere Materialien wie Kunststoff, Holz oder dgl. in Betracht kommen.

Bei dem hier vorgeschlagenen Verfahren werden schädliche Oberflächenreaktionen ausgeschlossen, die Deckbleche bleiben frei von einer Wärmeauswirkung.

## Patentansprüche

1. Verfahren zum Herstellen einer Leichtbauplatte aus zwei miteinander verbundenen Metallblechen, mit den folgenden Schritten:
- Aufschweißen von Stiften und Hülsen auf die eine Seite der Bleche in einem vorgegebenen Muster derart, dass an dem Ort, an dem auf das eine Blech Stifte aufgeschweißt werden, auf das andere Blech Hülsen aufgeschweißt werden, und
- Zusammenfügen der beiden Bleche unter Einführen und kraftschlüssigem Verbinden der Stifte in die und mit den Hülsen,
**dadurch gekennzeichnet, dass**
vor dem Zusammenfügen der Bleche auf das eine der Bleche ein Kern aus einem leichten, Wärme und/oder Schall dämmenden Material aufgelegt wird, und
die Stifte in die Hülsen unter Bildung einer Quetschverbindung eingepresst werden.

2. Verfahren nach Anspruch 1, **dadurch gekennzeichnet, dass** die zusammenwirkenden Flächen von Stiften und Hülsen rauh ausgebildet sind.

3. Verfahren nach Anspruch 1, **dadurch gekennzeichnet, dass** die zusammenwirkenden Flächen von Stiften und Hülsen mit Retentionen versehen sind.

4. Verfahren nach einem der vorangehenden Ansprüche, **dadurch gekennzeichnet, dass** die Bleche aus Aluminium oder einer Aluminiumlegierung bestehen.

5. Verfahren nach einem der vorangehenden Ansprüche, **dadurch gekennzeichnet, dass** die Stifte und/oder die Hülsen aus Aluminium oder einer Aluminiumlegierung bestehen.

6. Verfahren nach einem der vorangehenden Ansprüche, **dadurch gekennzeichnet, dass** der Kern aus einem Aluminiumschaum besteht.

7. Verfahren nach einem der vorangehenden Ansprüche, **dadurch gekennzeichnet, dass** vor dem Zusammenfügen zwischen Bleche und Kern ein Klebstoff aufgebracht wird.
